# EUROPÄISCHE PATENTSCHRIFT

(11) **EP 3 428 091 B1**
(45) Veröffentlichungstag und Bekanntmachung des Hinweises auf die Patenterteilung: **23.09.2020**
(21) Anmeldenummer: 17180746.4
(22) Anmeldetag: 11.07.2017
(51) Int. Cl.: B65G 47/14, B27F 7/13, B23P 19/00

(54) **SORTIERGERÄT ZUM LAGERICHTIGEN SORTIEREN VON WERKSTÜCKEN**
SORTING APPARATUS FOR SORTING WORKPIECES IN THE CORRECT POSITION
APPAREIL DE TRI DESTINÉ À TRIER EN POSITION EXACTE DES PIÈCES

(43) Veröffentlichungstag der Anmeldung: 16.01.2019
(73) Patentinhaber: Weinmann Holzbausystemtechnik GmbH, 72813 St. Johann (DE)
(72) Erfinder: Weinmann, Karl, 72813 St. Johann (DE)
(74) Vertreter: Kohler Schmid Möbus Patentanwälte

(56) Entgegenhaltungen:
- WO-A1-99/07627
- DE-A1- 2 322 080
- JP-A- S4 946 156
- US-A- 1 546 915
- US-A- 1 812 501
- US-A- 1 888 520
- US-A- 2 540 934
- US-A- 2 735 096
- US-A- 3 106 316
- US-A- 4 601 408
- US-A- 5 176 299

## Beschreibung

Die Erfindung betrifft ein Sortiergerät zum lagerichtigen Sortieren von Werkstücken mit zumindest einem Behälter.

Bei unterschiedlichen industriellen Anwendungen, insbesondere bei der automatisierten Herstellung von Gegenständen, ist es häufig notwendig, Kleinteile, die aus einer Verpackung kommen, in einer bestimmten Richtung auszurichten, zu vereinzeln und einem Werkzeug zuzuführen. Beispielsweise kann es notwendig sein, bei der maschinellen Herstellung von Gebäudewänden, Nägel und/oder Schrauben zu sortieren, zu vereinzeln und einer Nagel- oder Schraubeinrichtung zuzuführen. Hierbei ist es bekannt, sogenannte Schwingförderer einzusetzen.
In Schwingförderern werden die Werkstücke wendelförmig nach oben transportiert, ausgerichtet und anschließend vereinzelt. Die Größe und Dimensionen eines solchen Schwingförderers müssen individuell an die zu vereinzelnden Teile angepasst werden.

Insbesondere wenn sehr lange Gegenstände, wie beispielsweise lange Schrauben, vereinzelt werden müssen, müssen Schwingfördertöpfe eingesetzt werden, die einen sehr großen Radius aufweisen. Solche Schwingförderer sind zum einen sehr teuer und zum anderen sehr großbauend und schwer. Wenn ein solcher Schwingförderer beispielsweise zusammen mit einem Portal bewegt werden soll, ist ein erhöhter Energieaufwand notwendig.

Die DE 23 22 080 Albeschreibt eine Vorrichtung zum Magazinieren von Einwegspritzen mit einem Aufnahmebehälter für die Spritzen, der Einhängeschlitze im Boden für die Spritzen aufweist und um eine Achse verschwenkbar ist, um die Spritzen aufzulockern, sodass dies in die Einhängeschlitze gleiten können.

US2540934A beschreibt ein Sortiergerät nach dem Oberbegriff des Anspruchs 1.

Aufgabe der vorliegenden Erfindung ist es, eine Sortiereinrichtung bereitzustellen, mit der Gegenstände unterschiedlicher Größe einfach sortiert werden können.
Gelöst wird diese Aufgabe erfindungsgemäß durch ein Sortiergerät mit den Merkmalen des Anspruchs 1.

Der Behälter eines solchen Sortiergeräts kann eine oszillierende Bewegung um die horizontale Schwenkachse ausführen. Aufgrund der oszillierenden Bewegung werden die zu sortierenden Werkstücke stets von einem Ende des Behälters zum Anderen und wieder zurück bewegt. Während dieser Bewegung gelangen einige der zu vereinzelnden Werkstücke in den Bereich des Schlitzes und werden dort aneinandergereiht. Durch die Austrittsöffnung können die Werkstücke dann den Behälter nacheinander in der richtigen Orientierung verlassen. Insbesondere eignet sich das erfindungsgemäße Sortiergerät dazu, Werkstücke zu vereinzeln, die einen Schaft und einen gegenüber dem Schaft im Querschnitt vergrößerten Kopf aufweisen. Dabei kann der Schlitz so dimensioniert sein, dass die Breite des Schlitzes etwas größer ist als der Querschnitt, insbesondere der Durchmesser, des Schafts, jedoch geringer ist, als der Querschnitt, insbesondere der Durchmesser, des Kopfs eines zu vereinzelnden Werkstücks.

Die Form des Behälters und/oder die Orientierung des Behälters zur Schwenkachse kann vorzugsweise so gewählt werden, dass die Werkstücke zum Schlitz geleitet werden. Beispielsweise kann der Schlitz an der tiefsten Stelle des Behälters vorgesehen sein, sodass die Werkstücke durch Wandungen oder Wandungsabschnitte des Behälters zum Schlitz geleitet oder geführt werden. Insbesondere kann die Form und/oder Ausrichtung so gewählt werden, dass längliche Werkstücke in Schlitzrichtung ausgerichtet werden. Der Behälter kann im Querschnitt beispielsweise v-, w-, oder u-förmig ausgebildet sein.

Besondere Vorteile ergeben sich, wenn der Behälter an seiner Unterseite eine Kante und/oder Vertiefung aufweist, in deren Bereich der Schlitz angeordnet ist. Die Kante und/oder die Vertiefung kann dabei die tiefste Stelle des Behälters sein. Die sich von der Kante erstreckenden Behälterinnenwandungen beziehungsweise die die Vertiefung ausbildenden Innenwandungsabschnitte können die Werkstücke zum tiefsten Punkt des Behälters und damit zum Schlitz führen. Die Vertiefung kann muldenförmig ausgebildet sein.

Der Behälter kann quaderförmig ausgebildet sein. Eine Kante des Quaders kann dabei den tiefsten Punkt des Behälters bilden.

An dieser Stelle ist anzumerken, dass die Sortiereinrichtung mehrere Behälter, insbesondere mehrere quaderförmige Behälter aufweisen kann. Auch ist es denkbar, dass die Unterseite der Sortiereinrichtung mehrere Kanten oder Vertiefungen aufweist, die jeweils einen Schlitz aufweisen können. Am Ende jedes Schlitzes kann eine Austrittsöffnung vorgesehen sein.

Vorteilhafterweise erstreckt sich der Schlitz in etwa senkrecht zur Schwenkachse. Aufgrund dieser Ausrichtung gelangen die zu vereinzelnden Teile leichter in den Schlitz.

Um eine einfachere Anpassung an unterschiedlich große zu sortierende Werkstücke vornehmen zu können, ist erfindungsgemäß eine Einrichtung zur Einstellung der Schlitzbreite vorgesehen. Beispielsweise kann der Behälter im Bereich des Schlitzes doppelwandig ausgebildet sein und kann eine der Wände relativ zur anderen Wand zur Vergrößerung oder Verkleinerung des Schlitzes verstellt werden. Auf diese Art und Weise ist es möglich, die Schlitzbreite auf die Breite des Schaftes der zu sortierenden Werkstücke einzustellen. Zusätzlich ist eine Einrichtung zur Einstellung der Größe der Austrittsöffnung erfindungsgemäß vorgesehen. Somit kann die Größe der Austrittsöffnung auf die Größe des Kopfes der zu sortierenden Werkstücke angepasst werden. Somit kann auch verhindert werden, dass zu sortierende Werkstücke den Behälter durch die Austrittsöffnung verlassen, ohne vorher im Schlitz aufgehängt zu sein.

Die Schwenkachse kann im Bereich der Austrittsöffnung angeordnet sein. Durch diese Maßnahme ist es besonders einfach möglich, einen Übergang der zu sortierenden Werkstücke zu einer weiteren Einrichtung, beispielsweise einer Puffereinrichtung, sicherzustellen, ohne das ein Werkstück herunterfällt.

Der Behälter kann einen Deckel und/oder eine verschließbare Befüllöffnung aufweisen. Dadurch kann verhindert werden, dass zu sortierende Werkstücke während der oszillierenden Bewegung des Behälters aus dem Behälter herausfallen.

Die Wandung des Behälters und/oder der Deckel können zumindest bereichsweise durchsichtig sein. Somit kann durch visuelle Kontrolle der Füllstand des Behälters überprüft werden. Beispielsweise kann der Behälter zumindest bereichsweise aus transparentem Kunststoff ausgebildet sein.

Der Behälter kann zumindest in einem hinteren Bereich umfangsmäßig geschlossen sein. Dadurch wird verhindert, dass zu sortierende Werkstücke aus dem Behälter fallen, wenn das hintere Ende des Behälters seinen tiefsten Punkt erreicht.

Weitere Vorteile ergeben sich, wenn im Innenraum des Behälters zumindest ein Umlenkelement vorgesehen ist. Dadurch kann bewirkt werden, dass zu sortierende Werkstücke, die sich im Behälter befinden, nicht nur von einem Ende zum anderen Ende des Behälters und zurück bewegt werden, sondern dass auch noch eine weitere Bewegung in ein Knäuel von zu sortierenden Werkstücken eingeleitet wird. Dadurch kann bewirkt werden, dass die zu sortierenden Werkstücke im Behälter ihre Orientierungen ändern, wodurch eine größere Wahrscheinlichkeit besteht, dass ein Schaft eines zu sortierenden Werkstücks in den Schlitz gelangt und das Werkstück anschließend durch seinen Kopf hängend im Schlitz gehalten wird.

Die Austrittsöffnung kann im vorderen Endbereich des Behälters angeordnet sein. Somit können die Werkstücke den Behälter an einem Ende verlassen und beispielsweise einer weiteren Führung oder Puffereinrichtung zugeführt werden.

Grundsätzlich ist es denkbar, dass sich der Schlitz über die gesamte Länge des Behälters erstreckt. Vorteile ergeben sich jedoch, wenn sich der Schlitz nicht über die gesamte Länge des Behälters erstreckt. Beispielsweise kann sich der Schlitz über etwa die Hälfte der Länge des Behälters erstrecken.

Es kann ein Füllstandsensor, insbesondere ein induktiver Näherungssensor, vorgesehen sein, um den Füllstand des Behälters zu überbewachen. Somit kann sichergestellt werden, dass der Behälter rechtzeitig wieder aufgefüllt wird.

Es kann ein Rückhalteelement zum Zurückhalten von Werkstücken vorgesehen sein. Ist kein Rückhalteelement vorhanden, so könnte es passieren, dass bei einer Schwenkbewegung des Behälters zu sortierende Werkstücke, die sich im Behälter, aber noch nicht im Schlitz befinden, die Werkstücke, die bereits im Schlitz hängen, überholen und somit verhindern, dass die im Schlitz hängenden Werkstücke in Richtung Austrittsöffnung transportiert werden. Wenn jedoch ein Rückhalteelement vorgesehen ist, so können bei einer entsprechenden Schwenkbewegung des Behälters zunächst die Werkstücke, die im Schlitz hängen, in Richtung Austrittsöffnung rutschen und anschließend, das heißt erst wenn der Behälter eine bestimmte Schwenkstellung erreicht hat, können die noch zu sortierenden Werkstücke in Richtung des vorderen Endes des Behälters gelangen und gegebenenfalls mit ihrem Schaft den Schlitz durchgreifen. Das Rückhalteelement kann als Rampe oder Profil ausgebildet sein.

Das Rückhalteelement kann schwenkbar im oder am Behälter angeordnet sein. Beispielsweise kann das Rückhalteelement als eine Art Wandung ausgebildet sein, die schwenkbar an einer Behälterinnenwand angeordnet ist. Das Rückhalteelement kann gegen eine Federkraft schwenkbar sein. Die Federkraft kann das Rückhalteelement zunächst in einer Rückhaltestellung halten. Wenn das Gewicht der Werkstücke zu groß wird, kann die Federkraft überwunden werden, so dass das Rückhalteelement weggeschwenkt wird und die Werkstücke sich ungehindert im Behälter bewegen können. Das Rückhalteelement kann jedoch auch als ortsfeste Wandung ausgebildet sein, wobei zwischen dem Rückhalteelement und der Unterseite des Behälters ein Freiraum verbleibt, durch den sich die Werkstücke bewegen können.

Es kann ein Antrieb vorgesehen sein, um den Behälter um die Schwenkachse zu verschwenken. Bei dem Antrieb kann es sich um einen elektrischen oder pneumatischen Antrieb handeln.

An die Austrittsöffnung kann sich eine Pufferstrecke anschließen. Im einfachsten Fall kann die Pufferstrecke einen Schlitz aufweisen. Die richtig sortierten beziehungsweise ausgerichteten Werkstücke können entlang des Schlitzes beispielsweise zu einer Vereinzelungseinrichtung transportiert werden.

Die Innenwand des Behälters kann zumindest bereichsweise eine reibungserhöhende Beschichtung aufweisen oder reibungserhöhend ausgebildet sein. Dadurch kann sichergestellt werden, dass die Werkstücke im Wesentlichen verschleißfrei im Behälter bewegt werden können.

Der Behälter kann im Innenraum im Bereich zumindest einer Stirnseite eine Dämpfungseinrichtung aufweisen. Auf diese Art und Weise kann die Lärmentwicklung im Betrieb der Sortiereinrichtung reduziert werden.

Der Behälter kann aus einem nicht-magnetischen Material ausgebildet sein. Dadurch kann verhindert werden, dass zu sortierende Werkstücke an der Innenwand des Behälters anhaften und die Sortierung blockieren.

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine erste Ansicht einer erfindungsgemäßen Sortiereinrichtung;
- Fig. 2: eine zweite Ansicht einer erfindungsgemäßen Sortiereinrichtung;
- Fig. 3: eine Variante eines Behälters mit Rückhalteelement;
- Fig. 4: eine Seitenansicht einer alternativen Ausführungsform eines Behälters;
- Fig. 5: eine Stirnseitenansicht einer weiteren Ausführungsform eines Behälters.

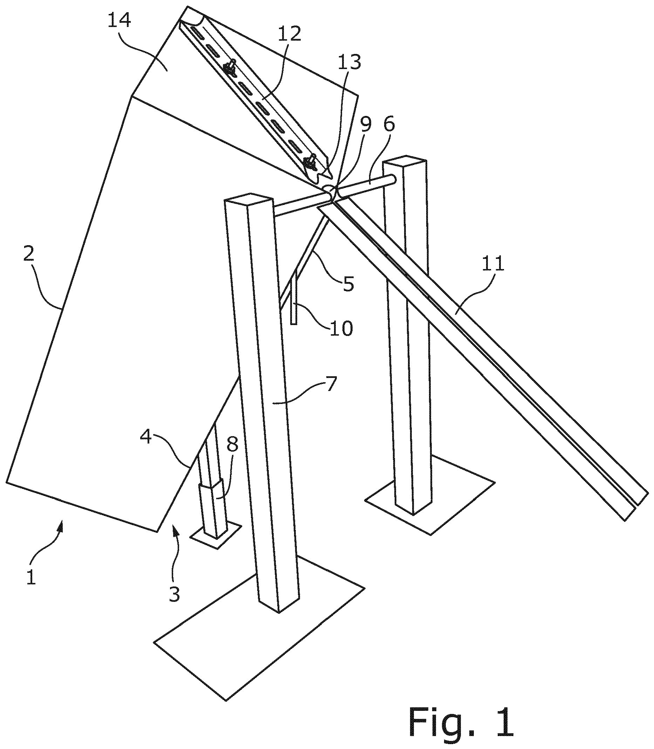

Die Fig. 1 zeigt eine Sortiereinrichtung 1 mit einem Behälter 2, der im gezeigten Ausführungsbeispiel quaderförmig ausgestaltet ist. Der Behälter 2 weist an seiner Unterseite 3 eine Kante 4 auf. Im vorderen Bereich des Behälters 2 ist im Bereich der Kante 4 ein Schlitz 5 ausgebildet. Im Bereich seines vorderen Endes ist der Behälter 2 über eine Schwenkachse 6 an einem Gestell 7 schwenkbar gelagert. Der Behälter 2 kann durch einen Antrieb 8 in eine oszillierende Schwenkbewegung versetzt werden. Insbesondere kann der Behälter 2 mit seinem hinteren Ende soweit angehoben werden, dass die Austrittsöffnung 9, die sich an den Schlitz 5 anschließt, den tiefsten Punkt des Behälters 2 bildet. Durch eine oszillierende Auf- und Abwärtsbewegung des Behälters 2 gelangen Werkstücke 10 in den Schlitz 5 und hängen mit ihrem Schaft aus dem Schlitz 5 nach unten aus dem Behälter 2 heraus. Ein Kopf der Werkstücke 10 ist im Durchmesser größer als die Schlitzbreite des Schlitzes 5, sodass die Werkstücke 10 zunächst am Behälter 2 gehalten werden. Wenn der Behälter 2 nun so weit nach oben verschwenkt wird, dass die Austrittsöffnung 9 den tiefsten Punkt bildet, rutschen die Werkstücke 10 in den Bereich der Austrittsöffnung 9 und können dann in eine schlitzförmige Pufferstrecke 11 übergehen. Von der Pufferstrecke 11 rutschen die Werkstücke 10 dann zu einer hier nicht dargestellten Vereinzelungseinrichtung.

Die Größe der Austrittsöffnung 9 wird erfindungsgemäß durch eine Einrichtung 12 eingestellt. Die Einrichtung 12 ist als Schiene mit einer Ausnehmung 13 ausgebildet. Sie lässt sich parallel zur Stirnwand 14 des Behälters 2 verstellen und in den Bereich der Austrittsöffnung 9 bewegen, um deren Querschnittsgröße beispielsweise zu verringern. Dadurch kann verhindert werden, dass Werkstücke 10 durch die Austrittsöffnung 9 hindurchtreten, ohne dass sie vorher im Schlitz 5 angeordnet waren.

Im gezeigten Ausführungsbeispiel weist der Behälter 2 nur eine Kante 4 auf. Grundsätzlich ist es denkbar, dass die Unterseite 3 des Behälters 2 so ausgebildet ist, dass mehrere Kanten 4 nebeneinander vorgesehen sind und entsprechend mehrere Schlitze 5. Entsprechend können mehrere Puffereinrichtungen 11 vorgesehen sein, sodass eine schnellere Sortierung und Zuführung der Werkstücke 10 zur weiteren Verarbeitung möglich ist. Im gezeigten Ausführungsbeispiel ist die Schwenkachse 6 im Bereich der Austrittsöffnung 9 angeordnet und ist die Austrittsöffnung 9 im vorderen Endbereich des Behälters 2 vorgesehen. Grundsätzlich wäre es auch denkbar, die Schwenkachse 6 an einer anderen Stelle des Behälters 2 anzuordnen. Es muss dann sichergestellt werden, dass Werkstücke 10, die aus der Austrittsöffnung 9 austreten, in die Pufferstrecke 11 gelangen, ohne dass sich deren Orientierung wieder ändert.

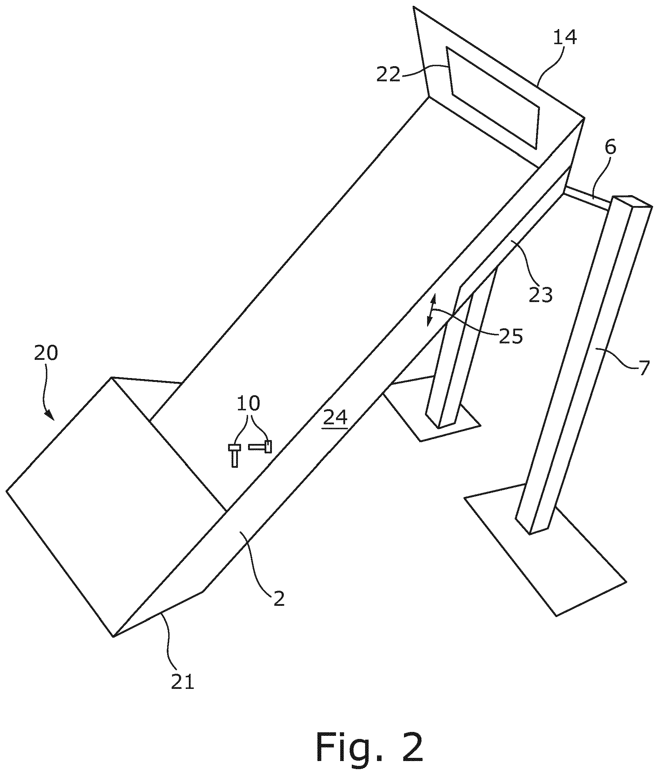

Die Fig. 2 zeigt eine weitere Ansicht der Sortiereinrichtung 1. Hier ist zu erkennen, dass der Behälter 2 lediglich in seinem hinteren Bereich 20 umfangsmäßig geschlossen ist. Dadurch kann verhindert werden, dass Werkstücke 10, wenn sie im hinteren Bereich 20 des Behälters 2 sind, diesen nicht verlassen können. Insbesondere im hinteren Bereich 20 des Behälters 2 können Umlenkelemente, beispielsweise Wandungen, die im Innenraum des Behälters 2 die Kante 21 überdecken, angeordnet sein, um die Werkstücke 10 dazu zu bringen, ihre Orientierung im Behälter 2 zu ändern.

An der Innenseite der Stirnwand 14 kann eine Dämpfungseinrichtung 22 vorgesehen sein, durch die die Werkstücke 10 abgebremst werden und die eine Geräuschentwicklung beim Aufprall der Werkstücke 10 reduziert.

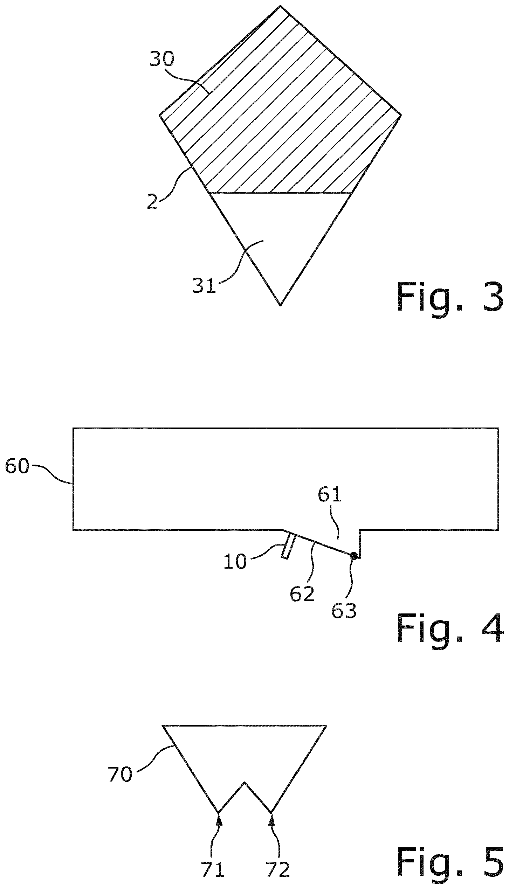

Um die Schlitzbreite des Schlitzes 5 verstellen zu können, ist erfindungsgemäß eine Einrichtung 23 vorgesehen, die relativ zur Wandung 24 verstellbar ist, um die Breite des Schlitzes 5, der im Bereich der Einrichtung 23 angeordnet ist, zu verstellen. Insbesondere kann die als Wandung ausgebildete Einrichtung 23 in Doppelpfeilrichtung 25 verstellt werden. Die Fig. 3 zeigt eine Variante des Behälters 2 in einer Schnittdarstellung. Ein Rückhalteelement 30 ist vorgesehen, welches nur im unteren Bereich des Behälters 2 eine Durchgangsöffnung 31 freigibt. Ist das Knäuel der Werkstücke 10 demnach größer als der Querschnitt der Durchgangsöffnung 31, so wird das Knäuel zunächst durch das Rückhalteelement 30 gebremst und es kann nur ein Teil der Werkstücke 10 die Durchgangsöffnung 31 passieren. Das Rückhalteelement 30 kann als Wandung ausgebildet sein, die quer zur Längsrichtung des Behälters 2 ausgerichtet ist.

Die Fig. 4 zeigt eine weitere Variation eines Behälters 60 in einer Seitenansicht. Der Behälter 60 weist eine Vertiefung 61 auf, die an ihrer Unterseite einen Schlitz 62 aufweist, der zur Sortierung und Aufreihung von Werkstücken 10 dient. Eine Schwenkachse 63 ist im Bereich des vorderen Endes des Schlitzes 62 und damit im Bereich einer hier nicht zu sehenden Austrittsöffnung angeordnet.

Die Fig. 5 zeigt eine Stirnseitenansicht einer weiteren Ausführungsform eines Behälters 70, der an seiner Unterseite zwei Tiefstellen mit jeweils einem Schlitz 71, 72 aufweist. Der Behälter ist zumindest im Bereich seiner Unterseite im Schnitt w-förmig ausgebildet.

## Patentansprüche

1. Sortiergerät (1) zum lagerichtigen Sortieren von Werkstücken (10) mit zumindest einem Behälter (2, 60, 70), der um eine horizontale Schwenkachse (6) schwenkbar angeordnet ist und an seiner Unterseite (3) mindestens einen in eine Austrittsöffnung (9) mündenden Schlitz (5, 62, 71, 72) aufweist, wobei eine Einrichtung (23) zur Einstellung der Schlitzbreite vorgesehen ist, die relativ zu einer Wandung (24) verstellbar ist, um die Breite des Schlitzes (5), der im Bereich der Einrichtung (23) angeordnet ist, zu verstellen, **dadurch gekennzeichnet, dass** eine Einrichtung (12) zur Einstellung der Größe der Austrittsöffnung (9) vorgesehen ist, die als Schiene mit einer Ausnehmung (13) ausgebildet ist, die sich parallel zu einer Stirnwand (14) des Behälters (2, 60, 70) verstellen und in den Bereich der Austrittsöffnung (9) bewegen lässt, um deren Querschnitt beispielsweise zu verringern.

2. Sortiergerät nach Anspruch 1, **dadurch gekennzeichnet, dass** die Form des Behälters (2, 60, 70) und/oder die Orientierung des Behälters (2, 60, 70) zur Schwenkachse (6) so gewählt ist, dass die Werkstücke (10) zum Schlitz (5, 62, 71, 72) geleitet werden.

3. Sortiergerät nach einem der vorhergehenden Ansprüche, **dadurch gekennzeichnet, dass** der Behälter (2, 60, 70) an seiner Unterseite (3) eine Kante (4) und/oder Vertiefung aufweist, in deren Bereich der Schlitz (5, 62, 71, 72) angeordnet ist.

4. Sortiergerät nach einem der vorhergehenden Ansprüche, **dadurch gekennzeichnet, dass** der Behälter (2) quaderförmig ausgebildet ist.

5. Sortiergerät nach einem der vorhergehenden Ansprüche, **dadurch gekennzeichnet, dass** die Erstreckungsrichtung des Schlitzes (5, 62, 71, 72) senkrecht zur Schwenkachse (6) verläuft.

6. Sortiergerät nach einem der vorhergehenden Ansprüche, **dadurch gekennzeichnet, dass** die Schwenkachse (6) im Bereich der Austrittsöffnung (9) angeordnet ist.

7. Sortiergerät nach einem der vorhergehenden Ansprüche, **dadurch gekennzeichnet, dass** der Behälter (2, 60, 70) einen Deckel und/oder eine verschließbare Befüllöffnung aufweist.

8. Sortiergerät nach einem der vorhergehenden Ansprüche, **dadurch gekennzeichnet, dass** der Behälter (2, 60, 70) zumindest in einem hinteren Bereich (20) umfangsmäßig geschlossen ist.

9. Sortiergerät nach einem der vorhergehenden Ansprüche, **dadurch gekennzeichnet, dass** im Innenraum des Behälters (2, 60, 70) zumindest ein Umlenkelement vorgesehen ist.

10. Sortiergerät nach einem der vorhergehenden Ansprüche, **dadurch gekennzeichnet, dass** die Austrittsöffnung (9) in einem vorderen Endbereich des Behälters (2, 60, 70) angeordnet ist.

11. Sortiergerät nach einem der vorhergehenden Ansprüche, **dadurch gekennzeichnet, dass** sich der Schlitz (5, 62, 71, 72) nicht über die gesamte Länge des Behälters (2, 60, 70) erstreckt.

12. Sortiergerät nach einem der vorhergehenden Ansprüche, **dadurch gekennzeichnet, dass** ein Füllstandssensor vorgesehen ist.

13. Sortiergerät nach einem der vorhergehenden Ansprüche, **dadurch gekennzeichnet, dass** ein Rückhaltelement (30) zum Zurückhalten von Werkstücken (10) vorgesehen ist.

14. Sortiergerät nach einem der vorhergehenden Ansprüche, **dadurch gekennzeichnet, dass** das Rückhaltelement (30) schwenkbar im oder am Behälter (2, 60, 70) angeordnet ist.

## Claims

1. Sorting device (1) for sorting workpieces (10) in the correct position, comprising at least one container (2, 60, 70) which is arranged so as to be able to pivot about a horizontal pivot axis (6) and has, on its underside (3), at least one slot (5, 62, 71, 72) that opens into an outlet opening (9), with a means (23) being provided for setting the slot width, which means is adjustable relative to a wall (24) in order to adjust the width of the slot (5), which is arranged in the region of the means (23), **characterized in that** a means (12) is provided for setting the size of the outlet opening (9), which means is designed as a rail which has a recess (13) and can be adjusted in parallel with an end wall (14) of the container (2, 60, 70) and can be moved into the region of the outlet opening (9), for example to reduce its cross section.

2. Sorting device according to claim 1, **characterized in that** the shape of the container (2, 60, 70) and/or the orientation of the container (2, 60, 70) with respect to the pivot axis (6) is selected such that the workpieces (10) are guided to the slot (5, 62, 71, 72).

3. Sorting device according to either of the preceding claims, **characterized in that** the container (2, 60, 70) has, on its underside (3), an edge (4) and/or depression, in the region of which the slot (5, 62, 71, 72) is arranged.

4. Sorting device according to any of the preceding claims, **characterized in that** the container (2) is cuboid.

5. Sorting device according to any of the preceding claims, **characterized in that** the direction of extension of the slot (5, 62, 71, 72) extends perpendicularly to the pivot axis (6).

6. Sorting device according to any of the preceding claims, **characterized in that** the pivot axis (6) is arranged in the region of the outlet opening (9).

7. Sorting device according to any of the preceding claims, **characterized in that** the container (2, 60, 70) has a lid and/or a closable filling opening.

8. Sorting device according to any of the preceding claims, **characterized in that** the container (2, 60, 70) is circumferentially closed at least in a rear region (20).

9. Sorting device according to any of the preceding claims, **characterized in that** at least one deflection element is provided in the interior of the container (2, 60, 70).

10. Sorting device according to any of the preceding claims, **characterized in that** the outlet opening (9) is arranged in a front end region of the container (2, 60, 70).

11. Sorting device according to any of the preceding claims, **characterized in that** the slot (5, 62, 71, 72) does not extend over the entire length of the container (2, 60, 70).

12. Sorting device according to any of the preceding claims, **characterized in that** a fill level sensor is provided.

13. Sorting device according to any of the preceding claims, **characterized in that** a retaining element (30) for retaining workpieces (10) is provided.

14. Sorting device according to any of the preceding claims, **characterized in that** the retaining element (30) is arranged so as to be able to pivot in or on the container (2, 60, 70).

## Revendications

1. Appareil de tri (1) destiné à trier en position exacte des pièces (10), comportant au moins un récipient (2, 60, 70), lequel est disposé de manière à pouvoir pivoter autour d'un axe de pivotement horizontal (6) et présente, sur sa face inférieure (3), au moins une fente (5, 62, 71, 72) débouchant dans une ouverture de sortie (9), un dispositif (23) destiné à ajuster la largeur de la fente étant prévu, lequel dispositif est réglable par rapport à une paroi (24) afin de régler la largeur de la fente (5) disposée au niveau du dispositif (23), **caractérisé en ce qu'**un dispositif (12) destiné à ajuster la taille de l'ouverture de sortie (9) est prévu, lequel dispositif est conçu sous la forme d'un rail comportant un évidement (13), lequel rail peut être réglé parallèlement à une paroi frontale (14) du récipient (2, 60, 70) et peut être déplacé dans la zone de l'ouverture de sortie (9), par exemple afin de réduire sa section transversale.

2. Appareil de tri selon la revendication 1, **caractérisé en ce que** la forme du récipient (2, 60, 70) et/ou l'orientation du récipient (2, 60, 70) par rapport à l'axe de pivotement (6) sont choisies de telle sorte que les pièces (10) sont guidées dans la fente (5, 62, 71, 72).

3. Appareil de tri selon l'une des revendications précédentes, **caractérisé en ce que** le récipient (2, 60, 70) présente, sur sa face inférieure (3), un bord (4) et/ou une dépression, dans la zone desquels la fente (5, 62, 71, 72) est disposée.

4. Appareil de tri selon l'une des revendications précédentes, **caractérisé en ce que** le récipient (2) est parallélépipédique.

5. Appareil de tri selon l'une des revendications précédentes, **caractérisé en ce que** la direction d'extension de la fente (5, 62, 71, 72) s'étend perpendiculairement à l'axe de pivotement (6).

6. Appareil de tri selon l'une des revendications précédentes, **caractérisé en ce que** l'axe de pivotement (6) est disposé dans öa zone de l'ouverture de sortie (9).

7. Appareil de tri selon l'une des revendications précédentes, **caractérisé en ce que** le récipient (2, 60, 70) présente un couvercle et/ou une ouverture de remplissage obturable.

8. Appareil de tri selon l'une des revendications précédentes, **caractérisé en ce que** le récipient (2, 60, 70) est fermé circonférentiellement au moins dans une zone arrière (20).

9. Appareil de tri selon l'une des revendications précédentes, **caractérisé en ce qu'**au moins un élément de déviation est prévu à l'intérieur du récipient (2, 60, 70).

10. Appareil de tri selon l'une des revendications précédentes, **caractérisé en ce que** l'ouverture de sortie (9) est disposée dans une zone d'extrémité avant du récipient (2, 60, 70).

11. Appareil de tri selon l'une des revendications précédentes, **caractérisé en ce que** la fente (5, 62, 71, 72) ne s'étend pas sur toute la longueur du récipient (2, 60, 70).

12. Appareil de tri selon l'une des revendications précédentes, **caractérisé en ce qu'**un capteur de niveau de remplissage est prévu.

13. Appareil de tri selon l'une des revendications précédentes, **caractérisé en ce qu'**un élément de retenue (30) destiné à retenir des pièces (10) est prévu.

14. Appareil de tri selon l'une des revendications précédentes, **caractérisé en ce que** l'élément de retenue (30) est disposé de manière à pouvoir pivoter dans ou sur le récipient (2, 60, 70).
